# EUROPÄISCHE PATENTANMELDUNG

(11) **EP 1 925 426 A1**
(43) Veröffentlichungstag der Anmeldung: **28.05.2008**
(21) Anmeldenummer: 07021604.9
(22) Anmeldetag: 07.11.2007
(51) Int. Cl.: B29C 63/48, B32B 21/08, C09J 5/06, B05C 11/02, B32B 37/12

(54) **Verfahren und Vorrichtung zum Beschichten einer Holzwerkstoffplatte mit einer Folie**

(30) Priorität: 24.11.2006 DE 102006055951
(71) Anmelder: Robert Bürkle GmbH, 72250 Freudenstadt (DE)
(72) Erfinder: Huber, Reinhard, 72250 Freudenstadt-Dietersweiler (DE)
(74) Vertreter: Kaiser, Magnus

(57) **Zusammenfassung**

Die Erfindung betrifft ein Verfahren und eine Vorrichtung zum Beschichten einer Holzwerkstoffplatte mit einer Folie. Die das Verfahren verwirklichende Vorrichtung umfasst eine Auftragsvorrichtung (6) zum Auftragen einer Schicht eines Reaktiv-Schmelzklebers auf eine Holzwerkstoffplatte (2), eine Glättwalze (7) zum Glätten der Reaktiv-Schmelzkleber-Schicht (14) und eine Fördereinrichtung (3) zum Transportieren der Holzwerkstoffplatte (2) von der Auftragsvorrichtung zur Glättwalze (7). Die Erfindung ist dadurch gekennzeichnet, dass die Glättwalze (7) beheizt ist, und dass eine Beschichtungsstation zum Aufbringen einer Folie auf die Reaktiv-Schmelzkleber-Schicht vorgesehen ist, wobei die Fördereinrichtung die Holzwerkstoffplatten (2) von der Auftragsvorrichtung (6) über die Glättwalze (7) in die Beschichtungsstation transportiert.

## Beschreibung

Die Erfindung betrifft ein Verfahren zum Beschichten einer Holzwerkstoffplatte mit einer Folie nach dem Oberbegriff des Anspruchs 1 sowie eine Vorrichtung zum Durchführen des Verfahrens nach dem Oberbegriff des Anspruchs 9.

Holzwerkstoffplatten, wie insbesondere Faserplatten, Spanplatten und Sperrholzplatten, werden verbreitet als Ersatz von früher eingesetzten Massivholzplatten verwendet, da sie nicht nur in der Herstellung billiger sind, sondern hinsichtlich ihrer Stabilität und der fehlenden Neigung, sich zu verziehen, Massivholzplatten meist überlegen sind. Ein wichtiges Anwendungsgebiet für Holzwerkstoffplatten ist die Herstellung von Möbeln und sonstiger Inneneinrichtung.

Überall dort jedoch, wo Holzwerkstoffplatten sichtbar sind, wie insbesondere bei Möbelfronten, ist es notwendig, die Oberflächen zu beschichten, um entweder den Eindruck einer Echtholzfläche oder den Eindruck einer lackierten Fläche zu erzielen. Zu beiden Zwecken werden auf die Holzwerkstoffplatten Folien auflaminiert, die meist Kunststofffolien sind, jedoch auch aus einem EchtholzFurnier bestehen können.

Hierzu wird üblicherweise zunächst ein wasserlöslicher Klebstoff auf Polyurethan-Basis - meist von Hand - auf die mit Folie zu beschichtende Oberfläche der Holzwerkstoffplatte aufgespritzt und danach eine erhitzte Folie auf die beleimten Holzwerkstoffplatten aufgezogen. Ein Beispiel für diesen Stand der Technik ist in der DE 20 2006 008 005 U1 beschrieben.

Es hat sich jedoch gezeigt, dass die Alterungsbeständigkeit eines wasserlöslichen Klebstoffs auf Polyurethan-Basis für den vorliegenden Anwendungsfall nicht optimal ist. Dementsprechend ist man bestrebt, einen Reaktiv-Schmelzkleber, insbesondere auf Polyurethan-Basis, zu verwenden, um die Folie auf die Holzwerkstoffplatte aufzulaminieren. Aufgrund der hohen Adhäsionsfähigkeit, jedoch vor allem aufgrund der sehr hohen Kohäsionsfähigkeit des Reaktiv-Schmelzklebers ist ein Auftragen desselben auf Holzwerkstoffplatten jedoch zumindest dann sehr problematisch, wenn die Kleberschicht dünn sein soll, denn sowohl beim Aufspritzen als auch bei einem - bei Reaktiv-Schmelzklebern üblichen - Aufbringen mittels einer Auftragswalze entstehen Unebenheiten in der Reaktiv-Schmelzkleber-Schicht. Jedenfalls dann, wenn die Holzwerkstoffplatten mit einer Hochglanzfolie beschichtet werden sollen, die den Eindruck einer lackierten Holzplatte hervorrufen soll, ist ein Glätten der Reaktiv-Schmelzkleber-Schicht nach dem Aufbringen unerlässlich.

Ein Beispiel für das Aufbringen eines Reaktiv-Schmelzklebers auf Holzwerkstoffplatten ist in der EP 1 423 208 A1 beschrieben. Dort wird vorgeschlagen, die mittels einer Auftragswalze auf eine Holzwerkstoffplatte aufgebrachte Reaktiv-Schmelzkleberschicht nach ihrem Auftrag mit einer Glättwalze zu glätten, um die Schicht möglichst dünn auftragen und mit einer glatten Oberfläche versehen zu können. Die Glättwalze beseitigt Unebenheiten in der Reaktiv-Schmelzkleber-Schicht, die aufgrund der hohen Kohäsionsfähigkeit des Reaktiv-Schmelzklebers entstehen.

Das in der EP 1 423 208 A1 beschriebene Auftrags- und Glättverfahren für eine Reaktiv-Schmelzkleber-Schicht birgt allerdings Schwierigkeiten am Ort der Glättwalze, da die Adhäsionsfähigkeit des Reaktiv-Schmelzklebers an dieser Stelle ungünstig ist. Demgemäß wird in der EP 1 423 208 A1 vorgeschlagen, die Glättwalze während des Glättens mit einem Trennmittel auf Paraffinwachs-Basis zu benetzen, um ein Ankleben des Reaktiv-Schmelzklebers an der Glättwalze sicher vermeiden zu können. Denn dies würde den Glättvorgang empfindlich stören und die "geglättete" Oberfläche unbrauchbar machen.

Ausgehend von diesem Stand der Technik liegt der Erfindung die Aufgabe zugrunde, ein Verfahren und eine Vorrichtung zum Beschichten von Holzwerkstoffplatten mit Folien vorzuschlagen, bei dem die bekannte Verwendung von Dispersionskleber durch die Verwendung von Reaktiv-Schmelzkleber ersetzt wird, ohne die umständliche Handhabung der bisher bekannten Verfahren zum Aufbringen von Reaktiv-Schmelzkleber in Kauf nehmen zu müssen.

Gelöst ist diese Aufgabe durch ein Verfahren mit den Merkmalen des Anspruchs 1, sowie durch eine Vorrichtung mit den Merkmalen des Anspruchs 9.

Bevorzugte Weiterbildungen des Verfahrens finden sich in den Ansprüchen 2 bis 8; bevorzugte Ausgestaltungen der erfindungsgemäßen Vorrichtung sind in den Ansprüchen 10 bis 19 niedergelegt.

Das Verfahren nach der vorliegenden Erfindung bringt also statt eines Dispersionsklebers auf die Holzwerkstoffplatte zunächst eine Schicht eines Reaktiv-Schmelzklebers auf, wonach dieser, wie an sich bekannt, mittels einer Glättwalze geglättet wird. Anschließend wird eine Folie auf die Reaktiv-Schmelzkleber-Schicht aufgebracht, um die Beschichtung der Holzwerkstoffplatte zu vervollständigen. Die Notwendigkeit, die Glättwalze mit einem Trennmittel laufend zu benetzen, entfällt jedoch, da die Glättwalze erfindungsgemäß beheizt wird. Neben der sehr viel einfacheren Verfahrensweise beim Glätten ergeben sich durch die Beheizung der Glättwalze außerdem bessere Glättergebnisse als mit einer unbeheizten Glättwalze, da durch das Beheizen am Ort des Glättens eine maximale Fließfähigkeit des Reaktiv-Schmelzklebers sichergestellt werden kann. Dieser Vorteil ergibt sich auch dann, wenn die erfindungsgemäße Beheizung der Glättwalze mit einem aus dem Stand der Technik bekannten, erfindungsgemäß eigentlich nicht mehr nötigen Benetzen der Glättwalze mit einem Trennmittel kombiniert wird. Auch eine solche Kombination liegt daher im Rahmen der vorliegenden Erfindung.

Die anschließend an das Glätten der Reaktiv-Schmelzkleber-Schicht erfindungsgemäß aufgebrachte Folie wird also auf eine vollkommen plane Oberfläche aufgelegt, so dass auch Hochglanz-Folien-Beschichtungen möglich sind, deren fertige Oberflächen optisch einer mit Hochglanzlack lackierten Fläche entsprechen, auch wenn die Folie nunmehr an einer Reaktiv-Schmelzkleber-Schicht anhaftet, und nicht mehr - wie für Hochglanzfolien bislang notwendig - auf einer Schicht aus weitaus fließfähigerem Dispersionskleber.

Die mit der vorliegenden Erfindung vorgeschlagene Vorrichtung zum Beschichten einer Holzwerkstoffplatte mit einer Folie umfasst demgemäß eine Auftragsvorrichtung zum Auftragen einer Schicht eines Reaktiv-Schmelzklebers auf die Holzwerkstoffplatte, eine Glättwalze zum Glätten der Reaktiv-Schmelzkleber-Schicht, eine Fördereinrichtung zum Transportieren der Holzwerkstoffplatte von der Auftragsvorrichtung zur Glättwalze sowie eine Beschichtungsstation zum Aufbringen einer Folie auf die Reaktiv-Schmelzkleber-Schicht, wobei die Fördereinrichtung die Holzwerkstoffplatte von der Auftragsvorrichtung an der Glättwalze vorbei in die Beschichtungsstation transportiert, und wobei die Glättwalze beheizt ist.

Der Reaktiv-Schmelzkleber, der beim Verfahren und der Vorrichtung der vorliegenden Erfindung verwendet wird, kann auf PU-Basis hergestellt sein. Er wird vorzugsweise mittels einer Auftragswalze auf die Holzwerkstoffplatte aufgebracht, jedoch liegt auch ein Aufspritzen des Reaktiv-Schmelzklebers vor dem Glätten der hierdurch entstandenen Schmelzkleberschicht im Rahmen der Erfindung. Mit dem Aufbringen des Schmelzklebers mittels einer Auftragswalze wird allerdings eine vorteilhaft dünne Schmelzkleberschicht aufgebracht werden können, was derzeit mit Reaktiv-Schmelzklebern bei einem Spritzauftrag nicht möglich ist. Da der Reaktiv-Schmelzkleber bei höheren Temperaturen fließfähiger ist, ist eine solche Auftragswalze vorzugsweise beheizt.

Besondere Vorteile ergeben sich im Rahmen der vorliegenden Erfindung, wenn an Kanten und/oder Vertiefungen der Holzwerkstoffplatte, wie sie typischerweise bei Möbelfronten vorkommen, ein spritzfähiger Klebstoff, beispielsweise ein herkömmlicher Dispersionsklebstoff oder aber ein Reaktiv-Schmelzkleber mit besseren Fließeigenschaften, aufgespritzt wird, während die ebenen Flächen vorzugsweise per Auftragswalze mit Reaktiv-Schmelzkleber versehen werden. Da Holzwerkstoffplatten an Kanten und in Vertiefungen normalerweise ohnehin aufgrund der angeschnittenen Faserschicht eine höhere Aufnahmefähigkeit bzw. Absorptionsrate für Klebstoff aufweisen, ist es vorteilhaft, an diesen Stellen einen separaten Klebstoffauftrag vorzusehen, um im Ergebnis eine gleichmäßige Klebstoff-Schicht über die gesamte, mit Folie zu beschichtende Oberfläche zu erhalten.

Soweit ein Aufspritzen von Reaktiv-Schmelzkleber und/oder von anderem spritzfähigen Klebstoff auf die Holzwerkstoffplatte vorgesehen ist, kann hierzu bevorzugt ein Roboter verwendet werden.

Die erfindungsgemäße Vorrichtung ist bevorzugterweise so ausgestaltet, dass die Fördereinrichtung aus unterschiedlichen Teilbereichen zusammengesetzt ist, nämlich aus einem Palettenförderer zum Transportieren einer Charge aus Holzwerkstoffplatten zur Beschichtungsstation, in der letztendlich die Folie aufgebracht wird, sowie aus einem Einzelplattenförderer, an dem die Auftragsvorrichtung und die Glättwalze angeordnet ist. Eine Ausschleusstation entnimmt bedarfsweise Holzwerkstoffplatten aus der auf dem Palettenförderer geförderten Charge und setzt die Holzwerkstoffplatten auf den Einzelplattenförderer auf. Nach bevorzugter Ausgestaltung kann der Einzelplattenförderer als Auftragsvorrichtung sowohl mindestens eine Spritzstation als auch mindestens eine Auftragswalze durchlaufen. Die Spritzstation kann hierbei einen Roboter umfassen, der auch gleichzeitig als Ausschleusstation dient, da er nicht nur Klebstoff aufspritzen kann, sondern auch einzelne Holzwerkstoffplatten vom Palettenförderer entnehmen kann.

Die eben beschriebene Ausgestaltung der erfindungsgemäßen Vorrichtung ermöglicht, mehrere unterschiedlich geformte Holzwerkstoffplatten chargenweise in die Beschichtungsstation einzubringen, was zum Einen die Verarbeitungskapazität der Beschichtungsstation erhöht und zum Anderen insbesondere bei Holzwerkstoffplatten für Möbel ermöglicht, diejenigen Teile, die zu einem Möbelstück zusammengesetzt werden sollen, chargenweise zusammengefasst zu beschichten. Gleichzeitig ist es in aller Regel jedoch nötig, die einzelnen Holzwerkstoffplatten aus einer Charge unterschiedlich mit Klebstoff zu versehen, insbesondere dann, wenn ebene Holzwerkstoffplatten mit dreidimensional gestalteten Möbelfronten zusammen in einer Charge beschichtet werden. Die Möbelfronten können dann beispielsweise an Kanten und Vertiefungen mit einem Dispersionsklebstoff mittels Spritzen versehen werden, während die ebenen Flächen mit Reaktiv-Schmelzkleber versehen werden, der mittels einer Auftragswalze aufgebracht wird. Die ebenen Holzwerkstoffplatten für den Korpus benötigen dagegen kein Aufspritzen von Dispersionsklebstoff.

Ein Ausführungsbeispiel für eine erfindungsgemäß ausgestaltete Vorrichtung wird im Folgenden anhand der beigefügten Zeichnungen näher beschrieben und erläutert. Es zeigen:
- Figur 1: eine schematische Draufsicht auf eine erfindungsgemäß ausgestaltete Vorrichtung;
- Figur 2: einen schematischen Schnitt durch eine mit Klebstoffschichten versehene Holzwerkstoffplatte.

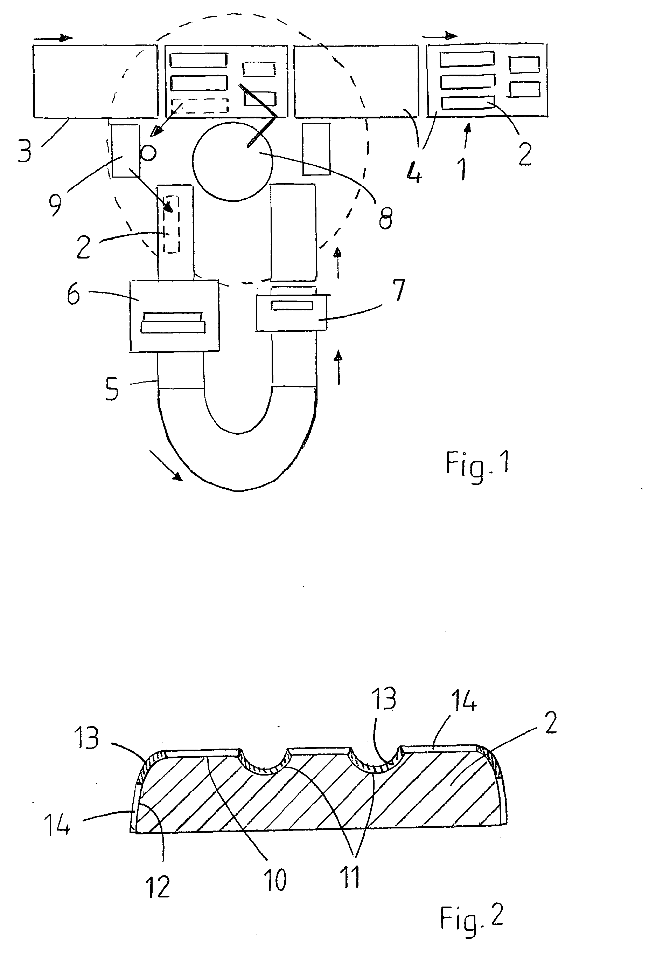

Figur 1 zeigt eine Draufsicht auf eine schematische Darstellung einer Vorrichtung, die nach einem bevorzugten Ausführungsbeispiel der vorliegenden Erfindung aufgebaut ist. Eine Charge 1 aus Holzwerkstoffplatten 2, die zusammen ein Möbelteil bilden sollen, wird auf einem Palettenförderer 3, jeweils in einer Palette 4 zusammengefasst, zu einer (nicht dargestellten), an sich bekannten Thermoform-Laminier-Presse transportiert. Der zuvor nötige Auftrag von Klebstoff auf die Holzwerkstoffplatten 2 erfolgt auf einem neben dem Palettenförderer 3 angeordneten Einzelplattenförderer 5, dessen Förderstrecke eine beheizte Auftragswalze 6 zum Auftragen einer Reaktiv-Schmelzkleber-Schicht und eine erfindungsgemäß beheizte Glättwalze 7 zum sorgfältigen Glätten dieser Schicht durchläuft. Das Ausschleusen der einzelnen Holzwerkstoffplatten 2 aus dem Palettenförderer 3 bzw. aus der Palette 4 auf den Einzelplattenförderer 5 erfolgt durch einen Roboter 8, der die Holzwerkstoffplatten 2 nicht nur erfasst und auf den Einzelplattenförderer 5 ablegt, sondern auch ein Entstauben, Bürsten und Glätten zur Vorbearbeitung der Oberflächen durchführt, sowie bedarfsweise - bei dreidimensional geformten Platten für Möbelfronten - Kantenbereiche und Vertiefungen mit einem Dispersionskleber auf Polyurethan-Basis mittels Aufspritzen versieht. Eine zusätzliche Walzstation 9 mit seitlichen Auftragswalzen bringt bedarfsweise Reaktiv-Schmelzkleber auf die Seitenkanten der Holzwerkstoffplatten 2 auf, während die Auftragswalze 6 die planen Oberflächen der Holzwerkstoffplatten 2 mit Reaktiv-Schmelzkleber versieht.

Nach dem Glätten der Reaktiv-Schmelzkleber-Schicht, die von der Auftragswalze 6 aufgebracht worden ist, mittels der beheizten und gegenläufig angetriebenen Glättwalze 7 sorgt der Roboter 8 dafür, dass die fertig beleimte Holzwerkstoffplatte 2 vom Einzelplattenförderer 5 wiederum in die Palette 4 auf den Palettenförderer 3 gelegt wird. Dementsprechend erfährt jede Holzwerkstoffplatte 2 auf dem Einzelplattenförderer 5 die auf ihre Form und ihren Einsatzzweck optimierte Beschichtung mit Klebstoff, bevor sie dann zusammen mit den anderen Holzwerkstoffplatten 2 der jeweiligen Charge 1 in der entsprechenden Palette 4 in die (nicht dargestellte) Beschichtungsstation gelangt.

Figur 2 ist eine schematische Schnittdarstellung einer Holzwerkstoffplatte 2, die dreidimensional ausgeformt ist und eine hochglanzbeschichtete Möbelfront werden soll. Eine Oberfläche 10 ist mit zwei Vertiefungen 11 versehen, und seitlich weist die Holzwerkstoffplatte 2 abgerundete Kantenflächen 12 auf. Die Vertiefungen 11 sind mit einer Schicht eines aufgespritzten Dispersionsklebers 13 auf Polyurethanbasis versehen, der auch an den Kantenflächen 12 zum Einsatz kommt, soweit diese abgerundet und nicht eben sind. Die ebene Oberfläche 10 der Holzwerkstoffplatte 2 ist mit einer mittels der Auftragswalze 6 aufgebrachten Schmelzkleber-Schicht 14 versehen, die gegenüber dem Dispersionskleber eine höhere Beständigkeit, eine dünnere Schichtstärke sowie eine glattere Oberfläche aufweist, da der Schmelzkleber keinerlei Quellung von etwa an der Oberfläche vorhandenen Spänen verursacht. Letzterer Vorteil fällt vor allem an den Kantenflächen 12 ins Gewicht, weswegen dort ebenfalls eine Schmelzkleber-Schicht 14 aufgebracht ist, soweit diese in der Walzstation 9 auf die hierfür erforderliche ebene Fläche aufgebracht werden kann.

Um die Oberflächenqualität nach Beschichten der Holzwerkstoffplatte 2 mit einer (nicht dargestellten) Hochglanzfolie noch zu verbessern, kann auch in den Vertiefungen 11 sowie an den Kantenflächen 12 durchgehend ein Reaktiv-Schmelzkleber anstatt des Dispersionsklebers 13 aufgebracht werden.

## Patentansprüche

1. Verfahren zum Beschichten einer Holzwerkstoffplatte mit einer Folie, wobei auf die Holzwerkstoffplatte zunächst eine Schicht eines Reaktiv-Schmelzklebers aufgebracht und diese mittels einer Glättwalze geglättet wird,
**dadurch gekennzeichnet,**
**dass** die Glättwalze beheizt wird und anschließend an das Glätten der Reaktiv-Schmelzkleber-Schicht eine Folie auf die Reaktiv-Schmelzkleber-Schicht aufgebracht wird.

2. Verfahren nach Anspruch 1,
**dadurch gekennzeichnet,**
**dass** ein Reaktiv-Schmelzkleber auf Polyurethan-Basis verwendet wird.

3. Verfahren nach einem der Ansprüche 1 oder 2,
**dadurch gekennzeichnet,**
**dass** der Reaktiv-Schmelzkleber mittels einer Auftragswalze auf die Holzwerkstoffplatte aufgebracht wird.

4. Verfahren nach Anspruch 3,
**dadurch gekennzeichnet,**
**dass** die Auftragswalze beheizt wird.

5. Verfahren nach mindestens einem der Ansprüche 1 bis 4,
**dadurch gekennzeichnet,**
**dass** auf Kanten und/oder Vertiefungen der Holzwerkstoffplatte ein spritzfähiger Klebstoff aufgespritzt wird.

6. Verfahren nach Anspruch 5,
**dadurch gekennzeichnet,**
**dass** als spritzfähiger Klebstoff ein wasserlöslicher Dispersionsklebstoff auf Polyurethan-Basis verwendet wird.

7. Verfahren nach Anspruch 5,
**dadurch gekennzeichnet,**
**dass** als spritzbarer Klebstoff ebenfalls ein Reaktiv-Schmelzkleber verwendet wird.

8. Verfahren nach mindestens einem der Ansprüche 1 bis 7,
**dadurch gekennzeichnet,**
**dass** der Reaktiv-Schmelzkleber und/oder der spritzfähige Klebstoff mittels eines Roboters (8) auf die Holzwerkstoffplatte (2) aufgespritzt wird.

9. Vorrichtung zum Beschichten einer Holzwerkstoffplatte mit einer Folie, umfassend eine Auftragsvorrichtung (6, 9) zum Auftragen einer Schicht eines Reaktiv-Schmelzklebers (14) auf die Holzwerkstoffplatte (2), eine Glättwalze (7) zum Glätten der Reaktiv-Schmelzkleber-Schicht (14) und eine Fördereinrichtung (5) zum Transportieren der Holzwerkstoffplatte (2) von der Auftragsvorrichtung (6, 9) zur Glättwalze (7),
**dadurch gekennzeichnet,**
**dass** die Glättwalze (7) beheizt ist, und dass eine Beschichtungsstation zum Aufbringen einer Folie auf die Reaktiv-Schmelzkleber-Schicht (14) vorgesehen ist, wobei die Fördereinrichtung (3, 5) die Holzwerkstoffplatte (2) von der Auftragsvorrichtung (6, 9) über die Glättwalze (7) in die Beschichtungsstation transportiert.

10. Vorrichtung nach Anspruch 9,
**dadurch gekennzeichnet,**
**dass** der Reaktiv-Schmelzkleber (14) ein Reaktiv-Schmelzkleber auf Polyurethan-Basis ist.

11. Vorrichtung nach einem der Ansprüche 9 oder 10,
**dadurch gekennzeichnet,**
**dass** eine Auftragswalze (6, 9) zum Auftragen des Reaktiv-Schmelzklebers (14) vorgesehen ist.

12. Vorrichtung nach Anspruch 11,
**dadurch gekennzeichnet,**
**dass** die Auftragswalze (6, 9) beheizt ist.

13. Vorrichtung nach mindestens einem der Ansprüche 9 bis 12,
**dadurch gekennzeichnet,**
**dass** eine Spritzstation (8) zum Aufspritzen von spritzfähigem Klebstoff auf Kanten (12) und/oder Vertiefungen (11) der Holzwerkstoffplatte (2) vorhanden ist.

14. Vorrichtung nach Anspruch 13,
**dadurch gekennzeichnet,**
**dass** der spritzfähige Klebstoff (13) ein wasserlöslicher Dispersionsklebstoff auf Polyurethan-Basis ist.

15. Vorrichtung nach Anspruch 13,
**dadurch gekennzeichnet,**
**dass** der spritzfähige Klebstoff ebenfalls ein Reaktiv-Schmelzkleber ist.

16. Vorrichtung nach mindestens einem der Ansprüche 9 bis 15,
**dadurch gekennzeichnet,**
**dass** ein Roboter (8) zum Aufspritzen des Reaktiv-Schmelzklebers (14) und/oder des spritzfähigen Klebstoffs (13) auf die Holzwerkstoffplatte (2) vorgesehen ist.

17. Vorrichtung nach mindestens einem der Ansprüche 9 bis 16,
**dadurch gekennzeichnet,**
**dass** die Fördereinrichtung aus einem Palettenförderer (3) zum Transportieren einer Charge (1) aus Holzwerkstoffplatten (2) zur Beschichtungsstation und einem Einzelplattenförderer (5) mit Auftragsvorrichtung (6, 9) und Glättwalze (7) besteht, wobei eine Ausschleusstation (8) zum bedarfsweisen Entnehmen einer Holzwerkstoffplatte (2) aus der Charge (1) und zum Aufsetzen auf den Einzelplattenförderer (5) vorgesehen ist.

18. Vorrichtung nach Anspruch 17,
**dadurch gekennzeichnet,**
**dass** die Ausschleusstation ein Roboter (8) oder ein Manipulator ist.

19. Vorrichtung nach einem der Ansprüche 17 oder 18,
**dadurch gekennzeichnet,**
**dass** der Einzelplattenförderer (5) sowohl mindestens eine Spritzstation (8) als auch mindestens eine Auftragswalze (6, 9) durchläuft.
